# EUROPEAN PATENT APPLICATION

(11) **EP 2 178 067 A1**
(43) Date of publication of application: **21.04.2010**
(21) Application number: 07791434.9
(22) Date of filing: 27.07.2007
(51) Int. Cl.: G09B 29/00, G01C 21/00, G08G 1/005, G09G 5/34, G09G 5/36

(54) **MAP DISPLAY SYSTEM, MAP DISPLAY DEVICE, AND MAP DISPLAY METHOD**

(71) Applicant: Navitime Japan Co., Ltd., Tokyo 107-0062 (JP)
(72) Inventor: SUZUKI, Yusuke, Tokyo 107-0062 (JP)
(74) Representative: HOFFMANN EITLE
(86) International application number: PCT/JP2007/064740
(87) International publication number: WO 2009/016693

(57) **Abstract**

When a map display system acquires first map data on an area of a predetermined range with a first display scale, the map display system also acquires second map data on an area of a larger range including the predetermined range with a second display scale at the same time. When the acquired first map data on the area of the predetermined range becomes insufficient since a first map displayed on a display means is scrolled, a map obtained by changing the display scale of the second map data to the first display scale is displayed. This provides the map display system which is controlled so as to efficiently acquire map data suitable for acommunication type navigation system.

## Description

### TECHNICAL FIELD

The present invention relates to a map display system, a map display, and a map display method for displaying a map in a route search system or the like; and particularly relates to a map display system, a map display, and a map display method whereby, when first map data composed of a first display scale configured from areas of the predetermined range is acquired from a server, second map data composed of a second display scale configured from areas of a wider range including a predetermined range is also simultaneously acquired; and in cases in which a first map displayed on a display means is scrolled and the acquired first map data of the areas of the predetermined range is insufficient, a map changed to the first display scale is displayed based on second map data that has already been acquired.

### BACKGROUND ART

In the past there have been known navigation devices and navigation systems wherein a user is guided by using map data and road data to conduct a search for a route from a desired point of departure to a destination. Examples of such navigation devices and navigation systems put into practice include automotive vehicle-mounted car navigation devices for guiding an operator along a route.

The car navigation system described above uses a GPS (global positioning system) in which GPS signals transmitted from a plurality of GPS satellites orbiting the earth are received by a GPS antenna, and a position is determined by analyzing satellite positions, time information, and the like that are included in the GPS signals.

Recently, the performance of mobile telephones, Personal Handyphone Systems, and other portable communication terminal devices has been dramatically improving, and these devices have become more multifunctional. Data communication functions in particular have been strengthened in addition to voice communication functions, and users are provided with various data communication services via the Internet. There has particularly been a trend according to which positioning units that have until now been installed only in some mobile telephones, e.g., GPS receivers and other devices which determine position by receiving signals from GPS satellites, are currently being installed in all models of mobile telephones known as third-generation phones.

Navigation systems for automotive vehicles (satellite navigation systems) are being developed as an applied technology, and also being put into practice are communication-type navigation systems for pedestrians, wherein a route search request is sent to a route search server by using a mobile telephone as a navigation terminal, and map/route guidance distributed from the route search server is received as a result.

Map information displayed in a navigation system or car navigation system includes map information covering wide areas to map information covering detailed information of urban areas or other smaller areas. For example, it is common for map information covering wide areas to be used in cases in which a portable navigation device is used while moving at high speeds in an automotive vehicle, and for map information covering detailed information of urban areas or other smaller areas to be used in cases in which a portable navigation system is used while moving by foot.

Map information covering wide areas is composed of information pertaining to railroads, highways, main buildings, and the like; and map information covering urban areas is composed of information pertaining to small roads, intersection points, retail premises, and the like in the covered range, in addition to the wide-area map information. These map information types having different specifics are referred to as map levels, and are configured such that the appropriate map is selected and used from the plurality of maps in accordance with the circumstances.

For example, map data composed of four levels is map data configured from different amounts of information, from a wide-area map covering a wide area to a city map covering a small area. Specifically, a first mesh is wide-area map data, a second mesh is midrange map data, a third mesh is detailed map data, and a fourth mesh is city map data.

The map data of all the levels is divided into meshes by predetermined latitude ranges and longitude ranges, and maps of specific areas are specified by mesh numbers. In a communication-type navigation system, mesh map data including at least the current position is distributed to the terminal device from a server. When the terminal device moves and the map data is insufficient, a request is made from the terminal device to the server to distribute the needed mesh map data. In an onboard navigation system, map data of a specified area is stored in advance in a hard disk device or the like.

Disclosed in, e.g., Patent Document 1 (Japanese Patent Publication No. 3842380; mentioned below) as an "onboard navigation device" is a technique whereby the displayed map is continuously scrolled using map information for displaying a wider scale than the current displayed map scale, when a map is displayed on the display means in this type of navigation system.

Patent Document 1 discloses a technique whereby map information for displaying a wider scale than the current displayed map scale is selected when scrolling begins, the map information acquisition means is instructed to acquire map information, the map information acquired by the map information acquisition means during scrolling is converted to coordinates in a current display map scale, and a map is drawn. It is thereby possible to scroll quickly and smoothly without increasing the memory capacity for storing map information.
[Patent Document 1]
Japanese Patent Publication No. 3842380 (paragraph [0012], FIG. 3)

### DISCLOSURE OF THE INVENTION

### [Problems the Invention Is Intended To Solve]

In a communication-type navigation system in which a navigation terminal device having no storage means for storing map data in advance receives the distribution of map data from a route search server, a smooth and continuous map display will sometimes not be possible while scrolling if the displayed map data cannot be received due to a delay in communication. Therefore, the conventional technique disclosed in the aforementioned Patent Document 1 is an effective technique in that a map is drawn using map information for displaying a wide-area scale, whereby the map can be scrolled over a wide range although the map information becomes coarse.

However, when the conventional technique disclosed in Patent Document 1 is applied to a communication-type navigation system, the terminal device requests map data from the route search server when scrolling begins, and problems have been presented with the needed map data not being received in time for the map to be displayed.

As a result of having performed various studies intended to solve the problems described above, the inventors of the present invention devised a way to solve the problems described above, and perfected the present invention by simultaneously acquiring upper level mesh map data including the same position from the server when mesh map data of a certain level needed for the display is acquired from the server.

Specifically, the present invention is intended to solve the problems described above, it being an object thereof to provide a map display system, a map display, and a map display method whereby the acquisition of map data suited to a communication-type navigation system is controlled so as to be performed efficiently.

Another object of the invention is to provide a map display system, a map display, and a map display method whereby mesh map data of an upper level higher by at least one level is also acquired when upper level mesh map data is acquired, a decision is made as to which of the upper level meshes the current display position is near, and a control is performed so as to select four meshes that can be scrolled a large amount and that include the current position.

### [Means for Solving the Abovementioned Problems]

In order to solve these problems, the invention according to a first aspect is:
a map display system comprising a map display for displaying a map, and an information distribution server for distributing map data to the map display, the information distribution server being connected to the map display via a network, the map display system characterized in comprising:
   map data storage means for storing map data having different display scales;
   map data acquisition means for acquiring first map data having a first display scale configured from an area of a predetermined range, and second map data having a second map scale configured from an area of a wider range including the predetermined range, from map data stored in the map data storage means;
   display means for displaying a map on the basis of the map data;
   scroll means for scrolling the map displayed on the display means; and
   display control means for displaying a map on the display means, the map having been changed to a predetermined display scale on the basis of the map data; wherein
   the display control means is configured so as to display a map changed to the first display scale on the basis of the second map data acquired by the map data acquisition means, when the first map displayed on the display means is scrolled by the scroll control means and the first map data acquired by the map data acquisition means is insufficient.

The invention according to a second aspect is the map display system according to the first aspect, **characterized in that**:
the map data stored in the map data storage means is configured from map data of different levels hierarchized according to the map display scale;
the first map data is first level map data of a small display scale and the second map data is second level map data of a larger display scale than the first map data; and
the second map data is in a level separated by at least one level from the first map data.

The invention according to a third aspect is the map display system according to the first aspect, **characterized in that:**
the map data stored in the map data storage means is configured from block map data segmented in predetermined unit area increments;
the area of the predetermined range in the first map data is a range having a plurality of peripheral blocks including a first block of the display position, from among first blocks segmented in predetermined first unit area increments; and
the area of the wide-area range in the second map data is a range having a plurality of adjacent blocks including a second block of the display position, from among second blocks segmented in second unit area increments configured by combining a plurality of the first unit areas.

The invention according to a fourth aspect is the map display system according to the third aspect, **characterized in that:**
the predetermined unit areas are areas divided into meshes by latitude and longitude;
the area of the predetermined range in the first map data is a range of nine peripheral blocks including a first block of the display position; and
the area of the wide-area range in the second map data is a range of four adjacent blocks including a second block of the display position.

The invention according to a fifth aspect is the map display system according to any of the first through fourth aspects, **characterized in that**:
the map data is map data created in vector format.

The invention according to a sixth aspect is:
a map display for displaying a map distributed from an information distribution server comprising map data storage means for storing map data having different display scales, the map display being connected via a network to the information distribution server; the map display characterized in comprising:
   map data acquisition means for acquiring first map data having a first display scale configured from an area of a predetermined range, and second map data having a second map scale configured from an area of a wider range including the predetermined range, from map data stored in the map data storage means;
   display means for displaying a map on the basis of the map data;
   scroll means for scrolling the map displayed on the display means; and
   display control means for displaying a map on the display means, the map having been changed to a predetermined display scale on the basis of the map data; wherein
   the display control means is configured so as to display a map changed to the first display scale on the basis of the second map data acquired by the map data acquisition means, when the first map displayed on the display means is scrolled by the scroll control means and the first map data acquired by the map data acquisition means is insufficient.

The invention according to a seventh aspect is the map display according to the sixth aspect, **characterized in that**:
the map data stored in the map data storage means is configured from map data of different levels hierarchized according to the map display scale;
the first map data is first level map data of a small display scale and the second map data is second level map data of a larger display scale than the first map data; and
the second map data is in a level separated by at least one level from the first map data.

The invention according to an eighth aspect is the map display according to the sixth aspect, **characterized in that**:
the map data stored in the map data storage means is configured from block map data segmented in predetermined unit area increments;
the area of the predetermined range in the first map data is a range having a plurality of peripheral blocks including a first block of the display position, from among first blocks segmented in predetermined first unit area increments; and
the area of the wide-area range in the second map data is a range having a plurality of adjacent blocks including a second block of the display position, from among second blocks segmented in second unit area increments configured by combining a plurality of the first unit areas.

The invention according to a ninth aspect is the map display according to the eighth aspect, **characterized in that**:
the predetermined unit areas are areas divided into meshes by latitude and longitude;
the area of the predetermined range in the first map data is a range of nine peripheral blocks including a first block of the display position; and
the area of the wide-area range in the second map data is a range of four adjacent blocks including a second block of the display position.

The invention according to a tenth aspect is the map display according to any of the sixth through ninth aspects, **characterized in that**:
the map data is map data created in vector format.

Furthermore, the invention according to an eleventh aspect is:
a map display method in a map display for displaying on display means a map distributed from an information distribution server comprising map data storage means for storing map data having different display scales, the map display being connected via a network to the information distribution server; the map display method characterized in comprising:
   a first step for acquiring first map data having a first display scale configured from an area of a predetermined range, and second map data having a second map scale configured from an area of a wider range including the predetermined range, from map data stored in the map data storage means;
   a second step for displaying a first map on the basis of the map data;
   a third step for scrolling the first map displayed by the second step; and
   a fourth step for displaying a map changed to the first display scale on the basis of the second map data acquired by the first step, when the first map data acquired by the first step is insufficient due to the process of scrolling the first map in the third step.

The invention according to a twelfth aspect is the map display method according to the eleventh aspect, **characterized in that**:
the map data stored in the map data storage means is configured from map data of different levels hierarchized according to the map display scale;
the first map data is first level map data of a small display scale and the second map data is second level map data of a larger display scale than the first map data; and
the second map data is in a level separated by at least one level from the first map data.

The invention according to a thirteenth aspect is the map display method according to the eleventh aspect, **characterized in that**:
the map data stored in the map data storage means is configured from block map data segmented in predetermined unit area increments;
the area of the predetermined range in the first map data is a range having a plurality of peripheral blocks including a first block of the display position, from among first blocks segmented in predetermined first unit area increments; and
the area of the wide-area range in the second map data is a range having a plurality of adjacent blocks including a second block of the display position, from among second blocks segmented in second unit area increments configured by combining a plurality of the first unit areas.

The invention according to a fourteenth aspect is the map display according to the thirteenth aspect, **characterized in that**:
the predetermined unit areas are areas divided into meshes by latitude and longitude;
the area of the predetermined range in the first map data is a range of nine peripheral blocks including a first block of the display position; and
the area of the wide-area range in the second map data is a range of four adjacent blocks including a second block of the display position.

The invention according to a fifteenth aspect is the map display according to any of the eleventh through fourteenth aspects, **characterized in that**:
the map data is map data created in vector format.

### [Effect of the Invention]

The invention according to the first aspect provides a map display system comprising a map display for displaying a map, and an information distribution server for distributing map data to the map display, the information distribution server being connected to the map display via a network; the map display system further comprising map data storage means for storing map data having different display scales (i.e., degrees of detail of information); map data acquisition means for acquiring first map data having a first display scale configured from an area of a predetermined range, and second map data having a second map scale configured from an area of a wider range including the predetermined range, from map data stored in the map data storage means; display means for displaying a map on the basis of the map data; scroll means for scrolling the map displayed on the display means; and display control means for displaying a map on the display means, the map having been changed to a predetermined display scale on the basis of the map data; wherein the display control means is configured so as to display a map changed to the first display scale on the basis of the second map data acquired by the map data acquisition means, when the first map displayed on the display means is scrolled by the scroll control means and the first map data acquired by the map data acquisition means is insufficient.

Therefore, since the second map data of a large range is always also acquired and prepared in advance when the first map data is acquired, a continuous map display can be performed even if the scrolling of the first map is continued and the scrolling reaches a position where the first map data cannot be acquired, because the map display is performed using the already-acquired second map data.

Specifically, when mesh map data of a level needed for the display is acquired from the server, upper level mesh map data including the same position is simultaneously acquired from the server. For example, when fourth mesh city map data is acquired, third mesh detailed map data is acquired, which is an upper level higher by one level. This poses a problem not only with the third mesh, but in cases of acquiring all upper level map data including second mesh midrange map data and first mesh wide-area map data as well; in that the size of the acquired data increases and the correspondence time increases.

In the invention according to the first aspect, the correspondence frequency is not increased to be greater than when all the upper level mesh map data are acquired, but the upper level mesh map data is also located in the terminal device when mesh map data of a certain level has already been acquired from the server to begin with, and it is possible to resolve situations in which upper level map data is supplemental during scrolling and nothing is displayed.

The invention according to the second aspect provides the map display system according to the first aspect, wherein the map data stored in the map data storage means is configured from map data of different levels hierarchized according to the map display scale (i.e., the degree of detail of information), the first map data is first level map data of a small display scale (i.e., a high degree of detail of information) and the second map data is second level map data of a larger display scale (i.e., a low degree of detail of information) than the first map data, and the second map data is in a level separated by at least one level from the first map data.

Therefore, since the upper level second map data separated at least one level higher from the first map data is always also acquired and prepared in advance when the first map data is acquired, a continuous map display can be performed without interrupting the map data even if the scrolling of the first map is continued and the scrolling reaches a position where the first map data cannot be acquired, because the map display is performed using the sufficiently large second map data which has already been acquired.

Even if the display scale is raised one level from the first map display composed of the first display scale, there is still second map data of the second display scale equivalent to a yet higher level, and the map display can therefore be instantly performed using the second map data even if the display scale selection is switched one level upward.

In other words, when mesh map data of the fourth mesh is acquired and only mesh map data of the third mesh which is one upper level higher is simultaneously acquired, there is no correspondence with the server because the third mesh map data has already been acquired, even if there is a change in the display scale of the map displayed using the lower level fourth mesh map data and a map is displayed using the third mesh map data one upper level higher. Therefore, since second mesh map data at a higher level than the third mesh map data cannot be acquired, there is a problem in that a situation occurs in which there is no supplementing by the second mesh map data if the third mesh map is scrolled, and nothing is displayed.

This does not mean that a proportionately large area is covered in an upper level mesh one level higher, which may create a situation in which nothing is displayed if scrolling is continued for a long time.

In the invention according to the second aspect, these problems can be resolved, and map data suited to a communication-type navigation system can be efficiently acquired.

The invention according to the third aspect provides a map display system according to the first aspect, wherein the map data stored in the map data storage means is configured from block map data segmented in predetermined unit area increments; the area of the predetermined range in the first map data is a range having a plurality of peripheral blocks including a first block of the display position, from among first blocks segmented in predetermined first unit area increments; and the area of the wide-area range in the second map data is a range having a plurality of adjacent blocks including a second block of the display position, from among second blocks segmented in second unit area increments configured by combining a plurality of the first unit areas.

Therefore, when first map data of a range composed of a plurality of peripheral blocks including the first blocks of the display position is acquired from among first blocks segmented in predetermined first unit area increments, second map data of a wide-area range composed of a plurality of adjacent blocks including the second blocks of the display position is also acquired and prepared in advance from among second blocks segmented in second unit area increments configured by constantly combining a plurality of first unit areas. Therefore, it is possible to perform a continuous map display without interrupting the map data even if scrolling of the first map is continued and the scrolling reaches a position where the first map data cannot be acquired, because the map is displayed using sufficiently large second map data that has already been acquired.

The invention according to the fourth aspect provides the map display system according to the first aspect, wherein the predetermined unit areas are areas divided into meshes by latitude and longitude, the area of the predetermined range in the first map data is a range of nine peripheral blocks including a first block of the display position; and the area of the wide-area range in the second map data is a range of four adjacent blocks including a second block of the display position.

Therefore, when first map data of a range composed of nine peripheral blocks including first blocks of the display position is obtained from among first blocks segmented into meshes in predetermined first unit area increments, second map data of a wide-area range composed of four adjacent blocks including second blocks of the display position is also acquired and prepared in advance from among second blocks divided into meshes in second unit area increments configured by constantly combining a plurality of first unit areas. Therefore, since the map is displayed using sufficiently large second map data that has already been acquired, it is possible to perform a continuous map display without interrupting the map data even if scrolling of the first map is continued and the scrolling reaches a position where the first map data cannot be acquired. Another effect is that the amount of data is minimized when second map data is acquired.

Specifically, when mesh map data is acquired from the server, in cases in which only one mesh including the current position of the terminal device is acquired and the scroll starting position is near an end of the mesh area, a scrolling display might not be possible, depending on the scrolling direction, for the mesh map data immediately acquired when scrolling is begun. Therefore, it is common to acquire from the server the nine mesh map data that are centered around the mesh map data including the current position and that are adjacent vertically, horizontally, and diagonally, but there is a problem with an increase in the amount of data acquired because of a tendency of the map data capacity per mesh to increase as the level becomes progressively higher.

In the invention according to the fourth aspect, this problem can be resolved, and map data suited to a communication-type navigation system can be efficiently acquired.

The invention according to the fifth aspect provides the map display system according to any of the first through fourth aspects, wherein the map data is map data created in vector format.

Therefore, since it is easy to change the map data in accordance with the display scale even with map data of different levels, it is possible to perform a continuous map display without interrupting the map data even if scrolling of the first map is continued and the scrolling reaches a position where the first map data cannot be acquired, because the map is displayed using sufficiently large second map data that has already been acquired.

In the invention according to any of the sixth through tenth aspects, it is possible to provide a map display constituting the map display system of the invention according to any of the first through fifth aspects.

Furthermore, in the invention according to any of the eleventh through fifteenth aspects, it is possible to provide a map display method in the map display of the invention according to any of the sixth through tenth aspects.

### BRIEF DESCRIPTION OF THE DRAWINGS

FIG. 1 is a system configuration diagram showing the structure of the navigation system according to an embodiment of the present invention;
FIG. 2 is a block diagram showing the structure of the terminal device and route search server according to an embodiment of the present invention;
FIG. 3 is a diagram showing the structure of the map data according to an embodiment of the present invention;
FIG. 4 is a view showing the configuration of the map data management table storing the correlation between the map level and the acquisition objective map in an example of the present invention;
FIG. 5 is a view showing the configuration of lower level map data distributed to the terminal device in an example of the present invention;
FIG. 6 is a view showing the configuration of upper level map data distributed to the terminal device in an example of the present invention;
FIG. 7 is a view showing an external view of a mobile telephone as a terminal device according to an example of the present invention;
FIG. 8 is a flowchart showing the operational procedure of a terminal device according to an example of the present invention; and
FIG. 9 is a view showing the correspondence between the map display screen of the display means, and the upper level map data and lower level map data stored in the received data storage means, according to an example of the present invention.

### [Key to Symbols]

- 10: navigation system
- 12: network
- 20: terminal device
- 201: control means
- 21: communication means
- 22: GPS reception means
- 23: search request means
- 24: received data storage means
- 25: display means
- 26: operational input means
- 27: scroll control means
- 28: map data request/acquisition means
- 29: map drawing control means
- 30: route search server
- 301: control means
- 31: communication means
- 32: route search means
- 33: guidance route data editing means
- 34: map database
- 35: route search network database

### BEST MODE FOR CARRYING OUT THE INVENTION

Embodiments of the present invention will be described in detail below using embodiments and drawings. The examples shown hereinbelow are intended to illustrate a navigation system for specifying the technological ideas of the present invention. The present invention is not intended to be limited to a navigation system and can be similarly applied to the other embodiments of map display systems included in the claims.

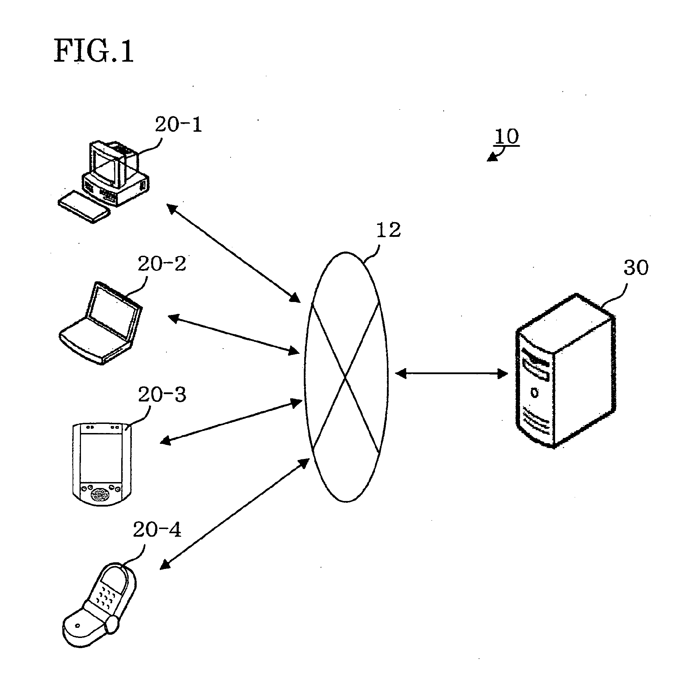

FIG. 1 is a system configuration view showing the configuration of a navigation system according to an example of the present invention. The navigation system 10 according to this example of the present invention is configured from a terminal device 20 connected via the Internet or another network 12, and a route search server 30 for providing various information. The navigation system 10, the terminal device 20, and the route search server 30 are respectively equivalent to the map display system, the map display device, and the information distribution server disclosed in the claims.

A portable game terminal, portable music terminal, or other mobile terminals can be used in addition to, e.g., a personal computer (PC) 20-1, a notebook PC 20-2, a PDA (personal digital assistant) terminal 20-3, or a mobile telephone 20-4 for the terminal device 20. In the navigation system 10, the terminal device 20 and the route search server 30 are connected via the network 12 as shown in FIG. 1, constituting a communication-type navigation system.

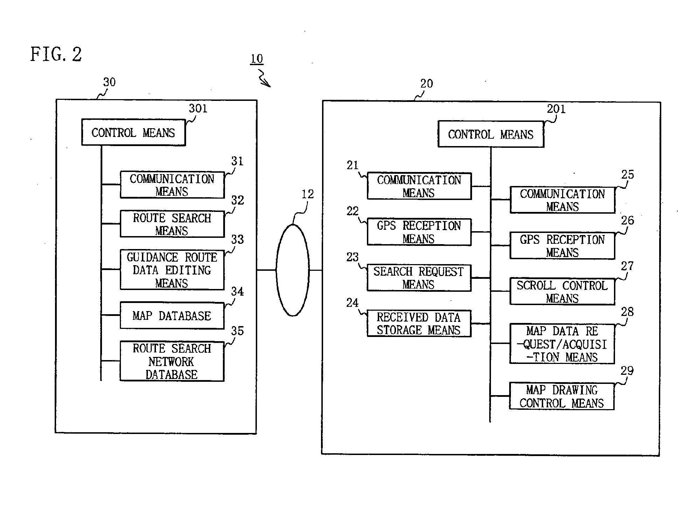

FIG. 2 is a block diagram showing the structure of the terminal device 20 and route search server 30 according to an embodiment of the present invention; FIG. 2 shows an example in which a mobile telephone is used as the terminal device 20.

The terminal device 20 has a function as a navigation terminal device. A pedestrian carries the device, and the device communicates wirelessly with a base station to establish a connection with the route search server 30 through the network 12 via the base station. The travel means (walking, automotive vehicle, or the like) and the current position or the desired point of departure and destination are set as route search conditions, and a route search request is transmitted to the route search server 30.

The route search server 30 refers to the road network data and searches for an optimal route according to the route search conditions, then compiles the optimal route into guidance route data, which is distributed together with map data to the terminal device 20. The route search server 30 also distributes to the terminal device 20 the map data requested according to a request from the terminal device 20.

The route search server 30 comprises control means 301, communication means 31, route search means 32, guidance route data editing means 33, a map database 34, and a route search network database 35, as shown in FIG. 2.

In the route search server 30, the control means 301 is a microprocessor having RAM, ROM, and processor (not shown), and controls the operation of each component through the use of a control program stored in the ROM. The communication means 31 is an interface for communicating with the terminal device 20 via the network 12.

The route search means 32 refers to the route search network database 35 and conducts a route search from the point of departure to the destination on the basis of the point of departure, the destination, other route search conditions, and current positional information transmitted from the terminal device 20. A technique known as a label setting algorithm or a Dijkstra algorithm is used as the technique for performing this type of route search. This type of configuration is similar to that of a common navigation system.

The route search network database 35 stores road network data for searching for movement routes by foot or by automotive vehicle, and traffic network data for searching for movement routes using public transportation. Specifically, nodal points and turning points in the road (route) are designated as nodes, routes joining the nodes together are designated as links; and the roads are configured from the node data, the link data, and link cost data which is the cost information (distance and required time) of all the links, and this data is compiled into a database. With public transportation network data, stations are designated as nodes, the links joining stations together are stored, and timetable data (vehicle departure times, arrival times, required times) of the trains or other vehicles constituting the links are stored as link cost data.

The road network data in the onboard navigation system only comprises roads on which the automotive vehicle can travel, and there is no need for pedestrian road network data related to pedestrian-only roads, paths in parks or station squares where the entry of vehicles is prohibited, and the like. In a navigation system for pedestrians, the data comprises the aforementioned pedestrian road network data for pedestrian-only roads, paths in parks or station squares where the entry of vehicles is prohibited, and the like in addition to a road network on which automotive vehicles can travel, but there is no need for network data of high-speed roads and other roads where foot traffic is prohibited.

Therefore, the route search network database 35 comprises automotive vehicle road network data and pedestrian network data. In cases in which the route search request is a route search request for a pedestrian, the route search means 32 performs a route search by using pedestrian network data. In cases in which the route search request is a route search request for an automotive vehicle, the route search means 32 performs a route search by using automotive vehicle road network data.

The route search network database 35 may be configured so as to store road network data both for automotive vehicles and for pedestrians, road network data for automotive vehicles only, and road network data for pedestrians only. The network data compiling means (not shown) compiles the route search network database 35 and conducts a route search in accordance with the route search request.

In other words, the configuration can be designed so that in cases of a route search request for a pedestrian, the network data compiling means compiles data so as to add pedestrian-only network data to the common network data and conducts a route search. In cases in which the route search request is a route search request for an automotive vehicle, the network data compiling means preferably compiles data so as to add automotive vehicle-only network data to the common network data and conducts a route search. A traffic network is preferably added in cases in which travel by train or another form of public transportation is also used.

The guidance route data editing means 33 is intended to compile data so as to embed data of the optimal route or a plurality of recommended guidance routes searched by the route search means 32 into map data that includes the current position read from the map database 34, and to distribute the compiled results to the terminal device 20.

The guidance route data is distributed with the addition of map data to the guidance route created as vector data. Set in the guidance route data are the point of departure, turning points in the route, intersection points, the destination, and other guidance points along the guidance route searched by the route search means 32. Included in the guidance route data are the position coordinates (latitude and longitude) of these guidance points, and guidance information pertaining to the guidance points (guidance information for going straight or turning right or left). The terminal device 20 receives the distributed map data and guidance route data, displays the map and guidance route, and outputs the predetermined guidance by display or by audio when the guidance points are reached.

The map database 34 stores map data created in vector format.

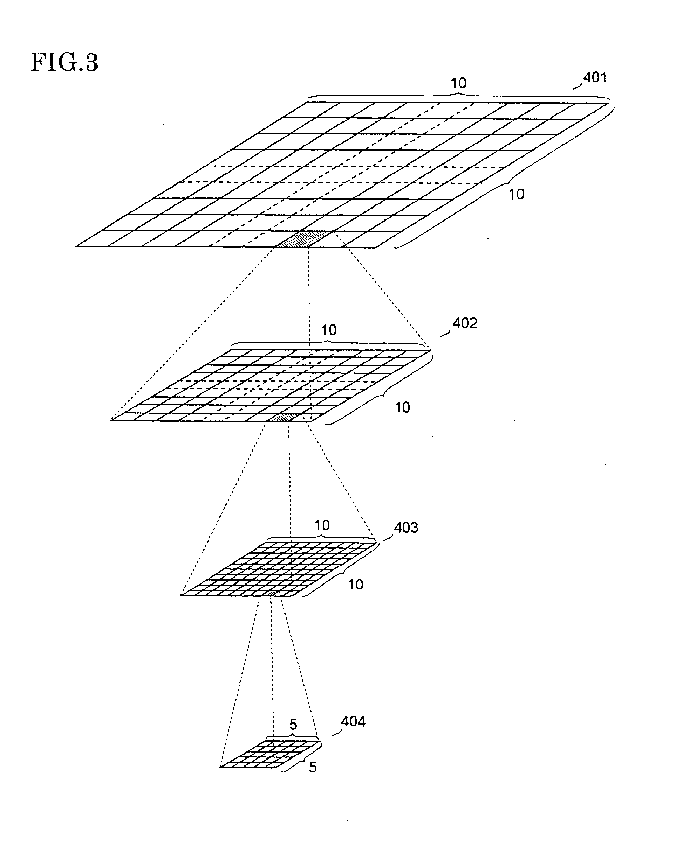

FIG. 3 is a diagram showing the structure of the map data. The map data stored in the map database 34 is composed of four levels from a first mesh to a fourth mesh as shown in FIG. 3, and comprises map data of different amounts of information according to the respective display scales (the scales). Specifically, the information amounts correspond respectively to four types of maps, which are a wide-area picture, a midrange picture, a detailed picture, and a city map.

In the map data created in vector format, the sizes of the element vectors constituting the map can be easily enlarged or reduced by calculating the desired lengths using reduction ratios and enlargement ratios, and map data enlarged or reduced at different reduction ratios or enlargement ratios can be obtained based on the map data of a certain level.

The map data of each level is configured from unit map data sectioned into predetermined latitude and longitude ranges. Specifically, the map data stored in the map database 34 comprises unit map data in mesh format (mesh data), wherein map areas are divided into predetermined latitude and longitude units as shown in FIG. 3.

To compare the sizes of the unit maps in mesh formats (mesh maps) of each level, the unit map (fourth mesh) 404 of the fourth level composed of a 5 × 5 mesh area is equivalent to one mesh area of the unit map (third mesh) 403 of the third level, which is one level higher.

The third mesh 403 composed of a 10 × 10 mesh area is equivalent to one mesh area of the unit map (second mesh) 402 of the second level, which is one level higher, and the second mesh 402 composed of a 10 × 10 mesh area is equivalent to one mesh area of the unit map (first mesh) 401 of the first level, which is one level higher.

The terminal device 20 is a terminal that can receive navigation service, and comprises control means 201, communication means 21, GPS reception means 22, search request means 23, data storage means 24, display means 25, operation input means 26, scroll control means 27, map data request/acquisition means 28, and map drawing control means 29, as shown in FIG. 2.

The control means 201 is a microprocessor having RAM, ROM, and processor (not shown), and controls the operation of each component through the use of a control program stored in the ROM. The communication means 21 is a communication interface for receiving and sending communication data with the route search server 30 via the network 12.

The GPS reception means 22 receives a signal from a GPS satellite and calculates the current position in terms of latitude and longitude. The calculated positional information (latitude, longitude) is sent to the route search server 30 and can be used when the point of departure or destination is indicated as the route search condition, or when a guidance route is displayed and the current position is specified.

The search request means 23 creates a route search request on the basis of the point of departure, the destination, the departure time, the arrival time, and other route search conditions set by the operation input means 26 and the display means 25; and the route search request is sent to the route search server 30.

The received data storage means 24 temporarily stores the guidance route data, the map data, the guidance data, and other data that is the route search result distributed from the route search server 30. The guidance route, the suggested route, and other guidance route data and map data stored in the data storage means 24 are read as necessary and are displayed on the display means 25.

In cases in which a map is displayed on the display means 25, a guidance route and a mark indicating the current position of the terminal device 20 are combined, and the current position mark is displayed so as to be the center of the display screen on a map of a specified reduced scale and a specified scope that include the current position of the terminal device 20 as determined by the GPS reception means 22. Since errors are included in the determined positional information, a route matching process for correcting the current position to the guidance route is performed in cases in which the current position deviates from the guidance route.

In cases in which audio guide data is added to the guidance route data distributed from the route search server 30, an audio message saying "Intersection 300 meters ahead, turn left" or the like is played from a speaker to guide the user when the terminal device 20 approaches an intersection point or a divergence point (guidance point), for example.

The display means 25 is composed of a liquid crystal display panel or the like, and is applied in the display of the map or of the guidance route or suggested route distributed from the route search server 30. The display means 25 also functions as input means for displaying a menu screen and operating the terminal device 20.

The operation input means 26 is composed of alphanumeric and other functional keys, as well as selection keys, scroll keys (up, down, left, and right arrow keys), and the like. The operation input means 26 is also used as an input function for performing inputs for operating the terminal device 20.

The point of departure, the destination, the departure time, the arrival time, and other route search conditions are set through the operational input means 26 or the display means 25, and mesh data (a unit map) is also designated through the operational input means 26 or the display means 25 in the case that map data is requested from the route search server 30.

It is common for the point of departure and destination settings to be indicated by latitude and longitude, but other possible options include a method for entering an address or phone number and converting it to latitude and longitude information through the database of the route search server 30, and a method for designating a point on the map displayed on the terminal device 20 and converting the point to latitude and longitude information. For the point of departure information, the current position of the terminal device 20 as determined by the GPS reception means 22 can be used as the point of departure, and the latitude and longitude information of the determined position point can be used.

In cases in which the user requests a route search from the route search server 30 in the terminal device 20, the user operates the operational input means 26 and displays a service menu or a predetermined input screen on the display means 25; and the point of departure, the destination, the travel means (walking, a combination of walking and public transportation, automotive vehicle, or the like), the planned departure time, the desired arrival time, and other route search conditions are entered.

Upon receiving guidance route data and map data from the route search server 30, the terminal device 20 temporarily stores the data in received data storage means 24; and a current position mark showing the current position of the terminal device 20, a map of a predetermined scope including the current position, and a guidance route are developed in the VRAM and displayed on the display means 25. In cases in which the map data is insufficient due to the terminal device 20 moving and causing the current position to change, or the scroll operation causing the displayed map scope to move, the terminal device 20 requests map data from the route search server 30 and receives the distribution of the insufficient map data.

The scroll control means 27 performs a scroll process for moving the map displayed on the display means 25 in a direction corresponding to the operated key when the scroll key of the operational input means 26 is operated. For example, when the mark of a cursor C displayed on the display means 25 is displayed in the center of the usual image and the left directional key of the scroll key SK is pressed so as to move the cursor C to the left, the entire display screen scrolls to the right so that the position of the cursor C remains in the center. When the up directional key of the scroll key SK is pressed so as to move the cursor C upward, the entire display screen scrolls downward so that the cursor C remains positioned in the center.

Based on current position information calculated by the GPS reception means 22 or scroll movement information detected by the scroll control means 27, the map data request/acquisition means 28 requests that the route search server 30 acquires the necessary map data that is not yet stored in the received data storage means 24. When a request is made to acquire the map data used in the display scale selected on the display (first map data composed of the first display scale), it is easy to adapt higher level map data (second map data composed of the second display scale) requested to be acquired at the same time. This adaptation is made through, e.g., a map data management table in which the map data classifications (first through fourth) and acquisition objective classifications are correlated into a table. This map data management table is distributed from the route search server 30 in advance and is kept in the received data storage means 24.

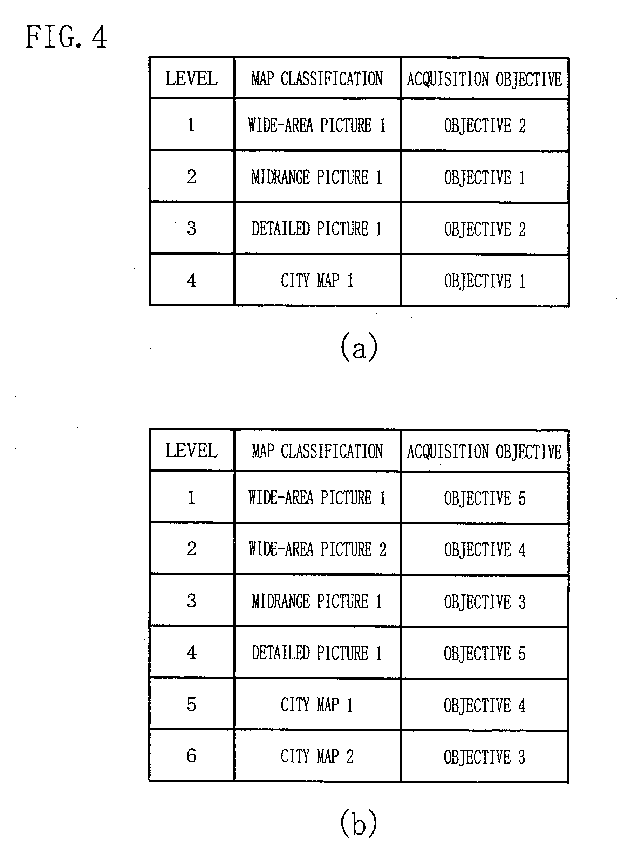

FIG. 4 contains diagrams showing the configurations of map data management tables storing the corresponding relationship between the map levels and acquisition objective maps. When there is already a request to acquire map data and another request to acquire map data is then made, these map data management tables store which classification of map data the other map data will be, for each level of map data corresponding to the map display scales.

In cases in which the map data encompasses four levels including a first (wide-area picture 1) through fourth (city map 1) level in order to correspond to four stages of map display scales as shown in FIG. 4(a), when the terminal device 20 requests that the route search server 30 acquire map data corresponding to the city map 1 of the fourth level, the correspondence (to acquisition objective 1) is made so that the route search server 30 is simultaneously requested to acquire map data corresponding to the mid-range picture 1 of the second level, which is two levels higher. When the terminal device 20 requests that the route search server 30 acquire map data corresponding to the detailed picture 1 of the third level, the correspondence (to acquisition objective 2) is made so that the route search server 30 is simultaneously requested to acquire map data corresponding to the wide-area picture 1 of the first level, which is two levels higher.

In cases in which the map data encompasses six levels including a first (wide-area picture 1) through sixth (city map 2) level in order to correspond to six stages of map display scales as shown in FIG. 4(b), when the terminal device 20 requests that the route search server 30 acquire map data corresponding to the city map 2 of the sixth level, the correspondence (to acquisition objective 3) is made so that the route search server 30 is simultaneously requested to acquire map data corresponding to the mid-range picture 1 of the third level, which is three levels higher.

When the terminal device 20 requests that the route search server 30 acquire map data corresponding to the city map 1 of the fifth level, the correspondence (to acquisition objective 4) is made so that the route search server 30 is simultaneously requested to acquire map data corresponding to the wide-area picture 2 of the second level, which is three levels higher. Furthermore, when the terminal device 20 requests that the route search server 30 acquire map data corresponding to the detailed picture 1 of the fourth level, the correspondence (to acquisition objective 5) is made so that the route search server 30 is simultaneously requested to acquire map data corresponding to the wide-area picture 1 of the first level, which is three levels higher.

Therefore, the map data request/acquisition means 28 preferably refers to the map data management table and determines upper and lower map data classifications that are separated by one level or more and acquired simultaneously when a request to acquire map data is made. The map data request/acquisition means 28 then preferably sends the map data classification to the route search server 30.

The route search server 30 distributes to the terminal device 20 the optimal guidance route data obtained as a result of the route search, and also distributes to the terminal device 20 the map data containing the current position in simultaneously acquired upper and lower levels separated by at least one level, on the basis of the current position information (latitude and longitude) and the map data classification received from the terminal device 20.

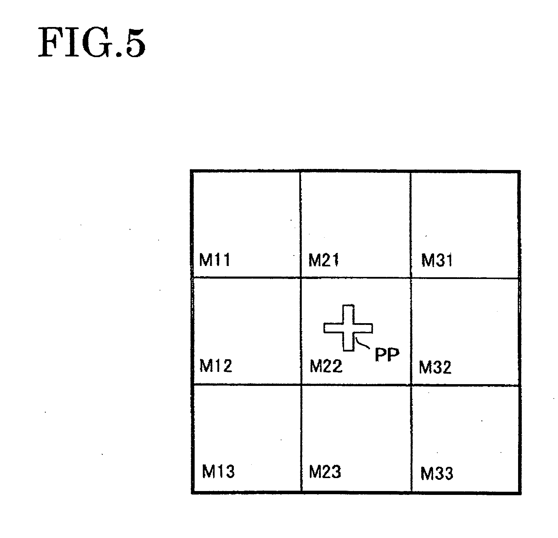

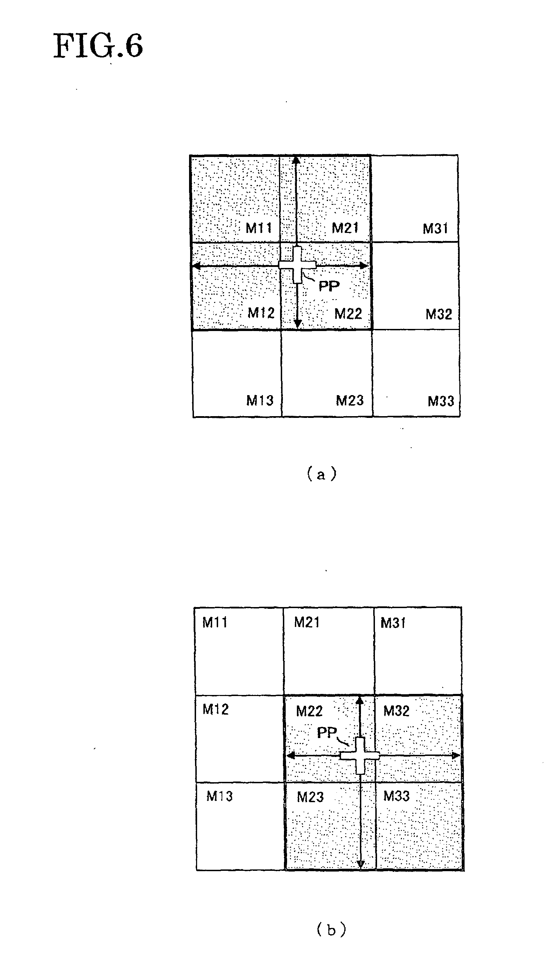

FIG. 5 is a diagram showing the configuration of lower level map data distributed to the terminal device 20, and FIG. 6 is a diagram showing the configuration of upper level map data distributed to the terminal device 20.

In cases in which lower level map data (first map data composed of the first display scale) used in the display scale selected on the display is distributed to the terminal device 20, unit map data M22 containing the current position PP of the terminal device 20 is centered, and a total of nine unit maps adjacent vertically, horizontally, and diagonally are distributed, including unit map data M21, M23, M12, M32, M11, M13, M31, and M33, as shown in FIG. 5.

In cases in which upper level map data (second map data composed of the second display scale) that has been requested to be acquired at the same time as the lower level map data is distributed to the terminal device 20, and the current position PP of the terminal device 20 is in the upper left of the unit map data M22 as shown in FIG. 6(a), for example; a total of four unit maps are distributed, including the unit map data M22 containing the current position PP of the terminal device 20, and the unit map data M21, M12, and M11 adjacent to the top, the left, and the upper left.

In cases in which the current position PP of the terminal device 20 is in the lower right of the unit map data M22 as shown in FIG. 6(b), a total of four unit maps are distributed, including the unit map data M22 containing the current position PP of the terminal device 20, and the unit map data M23, M32, and M33 adjacent to the bottom, the right, and the lower right.

Thus, when upper level map data is distributed, the unit map data (mesh data) containing the current position and the three nearest unit map data (mesh data) constitute the distribution objective map data. This is because the upper level map data covers a fairly large area relative to the lower level map data; therefore, it is unnecessary for nine unit maps to be distributed as is the case with the distribution of lower level map data, and the display area can be sufficiently covered with four unit maps. It is thereby possible to reduce the upper level map data distribution frequency and to minimize the amount of data distributed.

When the terminal device 20 moves and there is an insufficient amount of map data, the movement direction of the terminal device 20 is determined, and the route search server 30 delivers the needed portion of unit map data. At this time, since the route search server 30 stores in advance the same table as the map data management table delivered to the terminal device 20 as shown in FIG. 4, the route search server 30 refers to this map data management table and delivers to the terminal device 20 upper and lower level map data separated by at least one level. The same procedure applies when the terminal device 20 requests delivery of map data for a specific point or position of a POI (point of interest). The guidance route data is delivered to the terminal device 20 together with this upper and lower level map data.

The map drawing control means 29 reads predetermined map data stored in the received data storage means 24, and performs a control for displaying a map on the display means 25. The map drawing control means 29 comprises a map data enlarging/condensing process function, and creates enlarged and condensed map data by performing enlarging calculations and condensing calculations at a predetermined ratio relative to the map data stored delivered from the route search server 30 and stored in the received data storage means 24. For example, it is possible to create map data of a city map 1 condensed at a predetermined ratio from the map data of the mid-range picture 1 of the second level, as shown in FIG. 3. The same applies to map data of the other levels. The map drawing control means 29 performs a control for displaying a map on the display means 25 on the basis of the enlarged or condensed map data. The map drawing control means 29 is equivalent to the display control means disclosed in the claims.

The terminal device 20 thus receives the map data and guide route data from the route search server 30 and displays the map and the guide route in the display means 25.

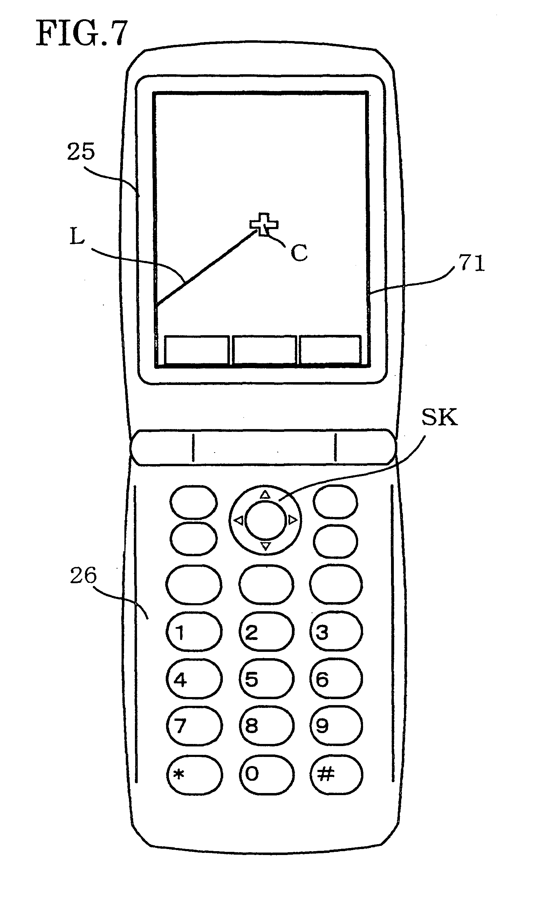

FIG. 7 is a view showing an external view of a mobile telephone as a terminal device according to an example of the present invention.

In the case that the terminal device 20 is a mobile telephone, the terminal device 20 comprises operational input means 26 and display means 25 as shown in FIG. 7. The keys of the operational input means 26 are provided with a scroll key SK (launcher key). A Clear key and a display form switch key are assigned to specified numeral keys or the like.

A map display screen 71 is shown on the display means 25, and the cursor C is displayed on the display screen 71 so that the starting point of the scrolling operation and the current position of the cursor are joined by a straight line L and so that the state of cursor movement is visible.

When the scroll key SK is operated, the screen automatically switches to scroll mode and the cursor C is displayed on the display screen. In this case, scroll mode is continued until a state is achieved in which the scroll key SK has not been operated for a predetermined amount of time, or until the Clear key is operated. The initial display position of the cursor C is in the middle of the screen.

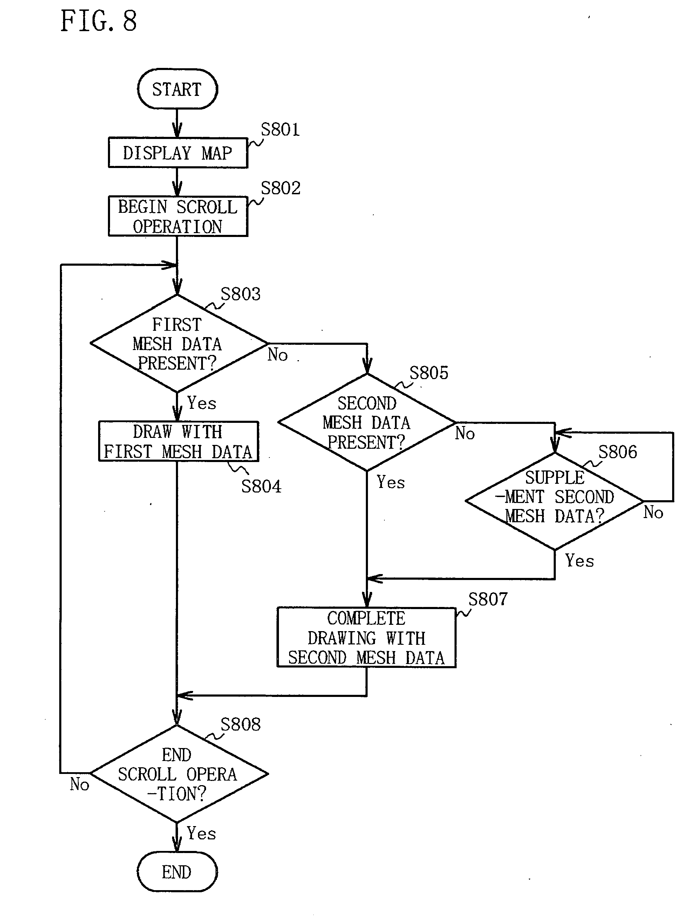

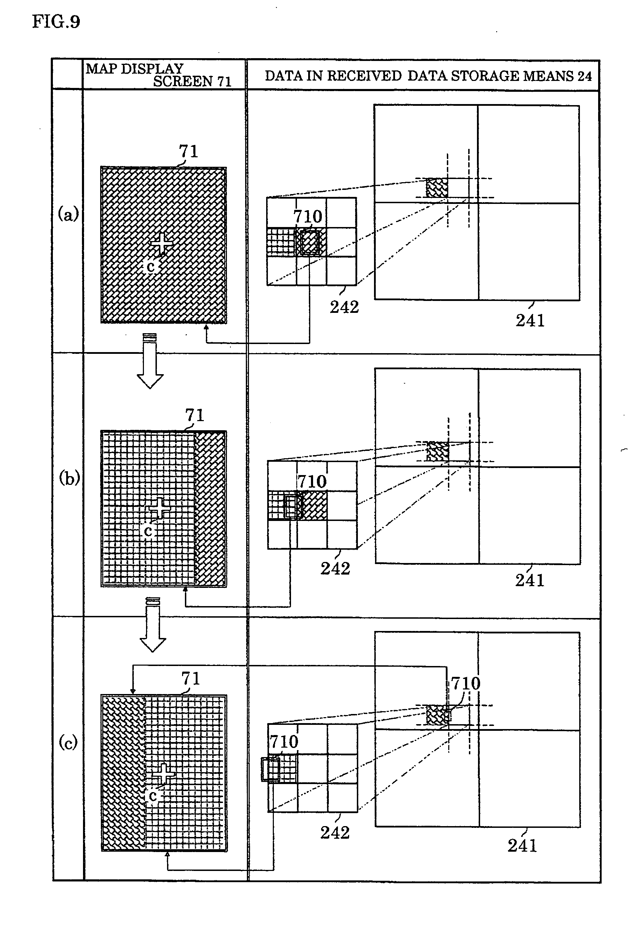

The following is a description, made with reference to the flowchart in FIG. 8 and the correspondence table between the map display screen and map data in FIG. 9, of the operational procedure of the map display method of the terminal device 20 according to the example of the present invention.

FIG. 8 is a flowchart showing the operational procedure of the terminal device according to the example of the present invention; and FIG. 9 is a view showing the correspondence between the map display screen 71 of the display means 25 according to the example of the present invention, and the upper level map data 241 and lower level map data 242 stored in the received data storage means 24.

The operational procedure shown in FIG. 8 is implemented by the control means 201 of the terminal device 20 executing the control program stored in ROM.

First, in the process of step S801, guidance route data and the like is received from the route search server 30 via the communication means 21, and a map of search results is displayed on the display means 25 in accordance with the guidance route data.

FIG. 9(a) is a view showing an example of the map data 241 and 242 stored in the received data storage means 24, and an example of a map display screen displayed on the display means 25 using this map data, during the map display process of step S801. The map display screen 71 displays a map (a pattern of diagonal bricks) of the surrounding area of the current location centered around a cursor C indicating the current position. This diagonal brick patterned map data corresponds to the center unit map data included in the display area 710 equivalent to the display screen 71 of the terminal device 20, from the nine unit map data constituting the lower level map data 242 stored in the received data storage means 24.

Next, in the process of step S802, when the scroll key SK of the operation input means 26 is operated, the scroll operation is initiated by the scroll control means 27, and the process advances to step S803.

In the process of step S803, a decision is made as to whether or not the first scale mesh map data (lower level map data) used in the current display scale stored in the received data storage means 24 has become insufficient due to the scroll operation. If the data is sufficient, the process advances to the map drawing process in step S804, and if the data is insufficient, the process advances to step S805.

In the process of step S804, the map drawing control means 29 reads the predetermined first scale mesh map data stored in the received data storage means 24 and performs a control for displaying a map on the display means 25, and a scrolled map is displayed on the display means 25.

In the process of step S805, a decision is made as to whether or not second scale mesh map data (upper level map data) that can be used in the current display scale is stored in the received data storage means 24. If the data is insufficient, the process advances to step S806, and if the data is sufficient, the process advances to the map drawing process of step S807.

In the process of step S806, the map data request/acquisition means 28 requests that the route search server 30 acquire the necessary map data, then acquires the second scale mesh map data (upper level map data) together with the predetermined first scale mesh map data (lower level map data) from the route search server 30 in accordance with the request, and stores this data in the received data storage means 24. When the necessary map data is finished being supplemented, the process advances to the map drawing process of step S807.

Next, in the process of step S807, the map drawing control means 29 reads the predetermined second scale mesh map data stored in the received data storage means 24, implements a condensing process on the read second scale mesh map data so as to correspond to the display scale selected by the current display, and performs a control for displaying a map on the display means 25. A scrolled map is then displayed on the display means 25.

In the process of step S808, a decision is made by the scroll control means 27 as to whether or not the scroll operation has ended. The process returns to step S803 in cases in which the scroll operation has not ended, and the process is ended in cases in which a state is achieved wherein the scroll key SK has not been operated for a predetermined amount of time or the Clear key has been operated and the scroll operation has ended.

FIG. 9(b) is a view showing an example of the map data 241 and 242 stored in the received data storage means 24, and an example of a scroll result screen displayed on the display means 25 using this map data, during the scroll process of step S802. The display screen 71 displays a map (a pattern of diagonal bricks and a point grid pattern) of the surrounding area of the current location centered around a cursor C indicating the current position.

This map data of a diagonal brick pattern and a point grid pattern corresponds to the center unit map data and the left-adjacent unit map data included in the display area 710 equivalent to the display screen 71 of the terminal device, from the nine unit map data constituting the lower level map data 242 stored in the received data storage means 24.

FIG. 9C is a view showing another example of a scroll result screen displayed on the display means 25 during the scrolling process of step S802. FIG. 9C shows a scroll result screen of a case in which the scrolling process is continued further from the scroll result screen in FIG. 9B. The display screen 71 displays a map (a point grid pattern and a scaly pattern) of the surrounding area of the current location centered around a cursor C indicating the current position.

This point-grid-patterned and scaly-patterned map data corresponds to the unit map data adjacent to the left of the center unit map data included in the display area 710 included in the display screen 71 of the terminal device 20, from the nine unit map data constituting the lower level map data 242 stored in the received data storage means 24; and also to part of the map data included in the display area 710 equivalent to the display screen 71 of the terminal device, from the four unit map data constituting the upper level map data 241.

In the process of step S805 in the example described above, a decision is made as to whether or not the second scale mesh map data (upper level map data) that can be used in the current display scale is stored in the received data storage means 24, but since the second scale mesh map data is capable of covering an extremely large area, the display may be attempted without requiring confirmation of whether or not the data is sufficient.

In the example described above, after the first scale mesh map data (lower level map data) and the second scale mesh map data (upper level map data) have been acquired in the process of step 806, the process in step S807 is configured so that the map is displayed after the predetermined second scale mesh map data has been read from the received data storage means 24 and the condensing process has been performed. However, the process of step S807 may also be configured so that the predetermined first scale mesh map data is read from the received data storage means 24 and then the map is displayed.

With the navigation system according to the present invention as described in detail above, if the first scale mesh map data of the display range is sufficient in the received data storage means 24 when a map is displayed, then only the first scale mesh map data is used to draw the map. If the first scale mesh map data is insufficient, the received data storage means 24 is searched for second scale mesh map data, and if there is second scale mesh map data, the data is used and a display suited to the first scale is performed. In this case, the map is not densely displayed, but it can be quickly scrolled even if a large amount of scrolling is required. This is because a continuous display in which main highway roads and the like are connected can be performed.

There is no need to issue another request to acquire map data present in the received data storage means 24 that has already been acquired from the route search server 30. Since the second scale mesh map data (upper level map data) covers a fairly large area separated by at least one level from the first scale mesh map data (lower level map data), the frequency with which maps are acquired is inherently low. For example, there is a 50-fold difference in actual area between the map data of the fourth mesh 404 and the map data of the second mesh 402 shown in FIG. 3.

Therefore, since first scale mesh map data occupies a high proportion of the acquisition process and very few requests are made for acquiring second scale mesh map data, there is nearly no increase in load relative to conventional map data acquisition.

Because the second scale mesh map data is wide-area mesh data of two or more levels higher than the first scale mesh map data, in cases in which, e.g., the display scale changed from fourth mesh map data to third mesh map data, the second mesh map data can be used to supplement a map equivalent to the third mesh map data. Therefore, it will be possible to avoid having a white screen displayed, where no map is displayed, even during communication for acquiring first mesh map data together with third mesh map data. If map data is then acquired by combining third mesh map data and first mesh map data, a map can be displayed using the usual third mesh map data.

The present example is used to describe a four-stage or six-stage map display scale , but the navigation system according to the present invention is not limited to the configuration described above and may be configured from a larger number of levels. For example, with an eight-stage map display scale, upper and lower levels acquired simultaneously are separated by three levels. In cases in which the number of scale stages is an odd number, first mesh map data is also preferably acquired when upper level second mesh map data is acquired.

The present example is used to describe a terminal device as being a mobile telephone, but the navigation system according to the present invention is not limited to the configuration described above. Instead of a mobile telephone, the terminal device may also be a headphone stereo or other music player, a portable compact game device, a PDA, or another portable terminal; or a desktop or notebook personal computer (PC).

The route search server may be a server also having an automotive vehicle navigation function in addition to a navigation function for pedestrians. Furthermore, the terminal device may be a mobile telephone that does not have GPS positioning means. In the case of a mobile telephone having no GPS positioning means, it is preferable that positional information of the communication area be acquired by registering the position with a base station, and that the route search server determine the position by receiving the positional information from the mobile telephone.

Since the present invention is a technique relating to a map display method, the present invention is not limited to the present embodiment, and the present invention may be implemented as a map display application for a mobile telephone and may also be applied to a map website for providing map display service to a personal computer or another terminal device connected via the Internet.

## Claims

1. A map display system comprising a map display for displaying a map, and an information distribution server for distributing map data to said map display, the information distribution server being connected to said map display via a network; said map display system **characterized in** comprising:
map data storage means for storing map data having different display scales;
map data acquisition means for acquiring first map data having a first display scale configured from an area of a predetermined range, and second map data having a second map scale configured from an area of a wider range including the predetermined range, from map data stored in said map data storage means;
display means for displaying a map on the basis of said map data;
scroll means for scrolling the map displayed on said display means; and
display control means for displaying a map on said display means, the map having been changed to a predetermined display scale on the basis of said map data; wherein
said display control means is configured so as to display a map changed to said first display scale on the basis of the second map data acquired by said map data acquisition means, when the first map displayed on said display means is scrolled by the scroll control means and the first map data acquired by said map data acquisition means is insufficient.

2. The map display system according to claim 1, **characterized in that** the map data stored in said map data storage means is configured from map data of different levels hierarchized according to the map display scale;
said first map data is first level map data of a small display scale and the second map data is second level map data of a larger display scale than said first map data; and
said second map data is in a level separated by at least one level from said first map data.

3. The map display system according to claim 1, **characterized in that t**he map data stored in said map data storage means is configured from block map data segmented in predetermined unit area increments;
the area of said predetermined range in said first map data is a range having a plurality of peripheral blocks including a first block of the display position, from among first blocks segmented in predetermined first unit area increments; and
the area of said wide-area range in said second map data is a range having a plurality of adjacent blocks including a second block of the display position, from among second blocks segmented in second unit area increments configured by combining a plurality of said first unit areas.

4. The map display system according to claim 3, **characterized in that** said predetermined unit areas are areas divided into meshes by latitude and longitude;
the area of said predetermined range in said first map data is a range of nine peripheral blocks including a first block of the display position; and
the area of said wide-area range in said second map data is a range of four adjacent blocks including a second block of the display position.

5. The map display system according to any of claims 1 through 4, **characterized in that** said map data is map data created in vector format.

6. A map display for displaying a map distributed from an information distribution server comprising map data storage means for storing map data having different display scales, the map display being connected via a network to the information distribution server; said map display **characterized in** comprising:
map data acquisition means for acquiring first map data having a first display scale configured from an area of a predetermined range, and second map data having a second map scale configured from an area of a wider range including the predetermined range, from map data stored in said map data storage means;
display means for displaying a map on the basis of said map data;
scroll means for scrolling the map displayed on said display means; and
display control means for displaying a map on said display means, the map having been changed to a predetermined display scale on the basis of said map data; wherein
said display control means is configured so as to display a map changed to said first display scale on the basis of the second map data acquired by said map data acquisition means, when the first map displayed on said display means is scrolled by the scroll control means and the first map data acquired by said map data acquisition means is insufficient.

7. The map display according to claim 6, **characterized in that** the map data stored in said map data storage means is configured from map data of different levels hierarchized according to the map display scale;
said first map data is first level map data of a small display scale and the second map data is second level map data of a larger display scale than said first map data; and
said second map data is in a level separated by at least one level from said first map data.

8. The map display according to claim 6, **characterized in that** the map data stored in said map data storage means is configured from block map data segmented in predetermined unit area increments;
the area of said predetermined range in said first map data is a range having a plurality of peripheral blocks including a first block of the display position, from among first blocks segmented in predetermined first unit area increments; and
the area of said wide-area range in said second map data is a range having a plurality of adjacent blocks including a second block of the display position, from among second blocks segmented in second unit area increments configured by combining a plurality of said first unit areas.

9. The map display according to claim 8, **characterized in that** said predetermined unit areas are areas divided into meshes by latitude and longitude;
the area of said predetermined range in said first map data is a range of nine peripheral blocks including a first block of the display position; and
the area of said wide-area range in said second map data is a range of four adjacent blocks including a second block of the display position.

10. The map display according to any of claims 6 through 9, **characterized in that** said map data is map data created in vector format.

11. A map display method in a map display for displaying on display means a map distributed from an information distribution server comprising map data storage means for storing map data having different display scales, the map display being connected via a network to the information distribution server; said map display method **characterized in** comprising:
a first step for acquiring first map data having a first display scale configured from an area of a predetermined range, and second map data having a second display scale configured from an area of a wider range including the predetermined range, from map data stored in said map data storage means;
a second step for displaying a first map on the basis of said map data;
a third step for scrolling the first map displayed by said second step; and
a fourth step for displaying a map changed to said first display scale on the basis of the second map data acquired by said first step, when the first map data acquired by said first step is insufficient due to the process of scrolling said first map in said third step.

12. The map display method according to claim 11, **characterized in that** the map data stored in said map data storage means is configured from map data of different levels hierarchized according to the map display scale;
said first map data is first level map data of a small display scale and the second map data is second level map data of a larger display scale than said first map data; and
said second map data is in a level separated by at least one level from said first map data.

13. The map display method according to claim 11, **characterized in that** the map data stored in said map data storage means is configured from block map data segmented in predetermined unit area increments;
the area of said predetermined range in said first map data is a range having a plurality of peripheral blocks including a first block of the display position, from among first blocks segmented in predetermined first unit area increments; and
the area of said wide-area range in said second map data is a range having a plurality of adjacent blocks including a second block of the display position, from among second blocks segmented in second unit area increments configured by combining a plurality of said first unit areas.

14. The map display method according to claim 13, **characterized in that** said predetermined unit areas are areas divided into meshes by latitude and longitude;
the area of said predetermined range in said first map data is a range of nine peripheral blocks including a first block of the display position; and
the area of said wide-area range in said second map data is a range of four adjacent blocks including a second block of the display position.

15. The map display method according to any of claims 11 through 14, **characterized in that** said map data is map data created in vector format.
